(19) Europäisches Patentamt
European Patent Office
Office européen des brevets

(11) EP 0 718 367 A2

(12) **EUROPÄISCHE PATENTANMELDUNG**

(43) Veröffentlichungstag:
**26.06.1996 Patentblatt 1996/26**

(51) Int. Cl.[6]: **C08L 69/00**
// (C08L69/00, 63:02)

(21) Anmeldenummer: **95119330.9**

(22) Anmeldetag: **07.12.1995**

(84) Benannte Vertragsstaaten:
**DE ES FR GB IT NL**

(30) Priorität: **20.12.1994 DE 4445544**

(71) Anmelder: **BAYER AG**
**51368 Leverkusen (DE)**

(72) Erfinder:
- **Ebert, Wolfgang, Dr.**
  **D-47800 Krefeld (DE)**
- **Löwer, Hartmut, Dr.**
  **D-47802 Krefeld (DE)**
- **Köhler, Burkhard, Dr.**
  **D-51373 Leverkusen (DE)**
- **Vesper, Reiner**
  **D-42799 Leichlingen (DE)**
- **Konejung, Klaus, Dr.**
  **D-51467 Bergisch Gladbach (DE)**

(54) **Stabilisierte Polycarbonate**

(57) Gegenstand der vorliegenden Erfindung sind Mischungen aus Polycarbonaten und polymeren Epoxyharzen sowie gegebenenfalls weiteren Additiven, ihre Herstellung und ihre Verwendung als Formkörper für optische Anwendungen.

EP 0 718 367 A2

Printed by Rank Xerox (UK) Business Services
2.12.4/3.4

## Beschreibung

Gegenstand der vorliegenden Erfindung sind Mischungen, enthaltend

A) 99.999 Gew.-% bis 99,5 Gew.-%, vorzugsweise 99.995 Gew.-% bis 99,8 Gew.-% an thermoplastischen, aromatischen Polycarbonaten mit minleren Gewichtsmittelmolekulargewichten $\overline{M}_w$ (ermittelt durch GPC von 12 000 bis 40 000, vorzugsweise von 15 000 bis 35 000 und insbesondere von 15 000 bis 25 000 und

B) 0,001 Gew.-% bis 0,5 Gew.-%, vorzugsweise 0,005 Gew.-% bis 0,2 Gew.-% an polymeren Epoxyharzen mit mittleren Zahlenmittelmolekulargewichten $\overline{M}_n$ (ermittelt durch GPC) von 500 bis 25 000, vorzugsweise von 750 bis 5 000,
der Formel (I)

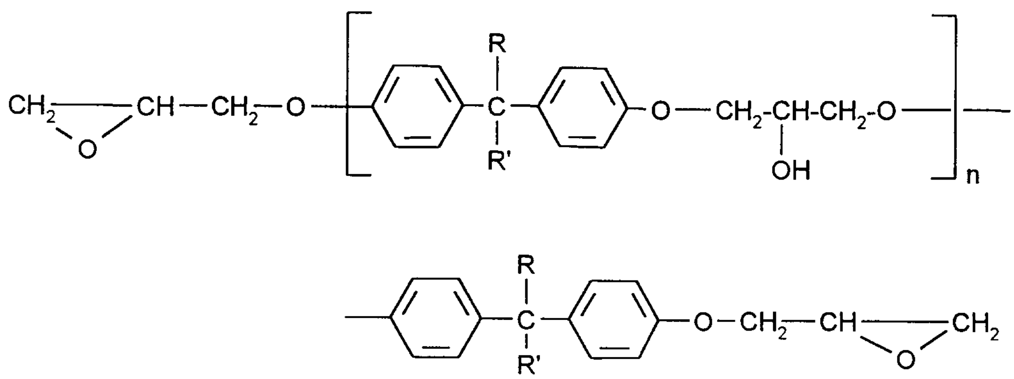

(I),

worin

R, R' unabhängig voneinander H, $C_1$-$C_{12}$-Alkyl, Phenyl, Benzyl oder zusammen einen Cyclohexyl-Rest bedeuten, vorzugsweise H, $CH_3$ oder zusammen den Cyclohexylrest bedeuten,
n eine ganze Zahl von 2 bis 1 000, vorzugsweise von 3 bis 20 ist, oder

der Formel (II)

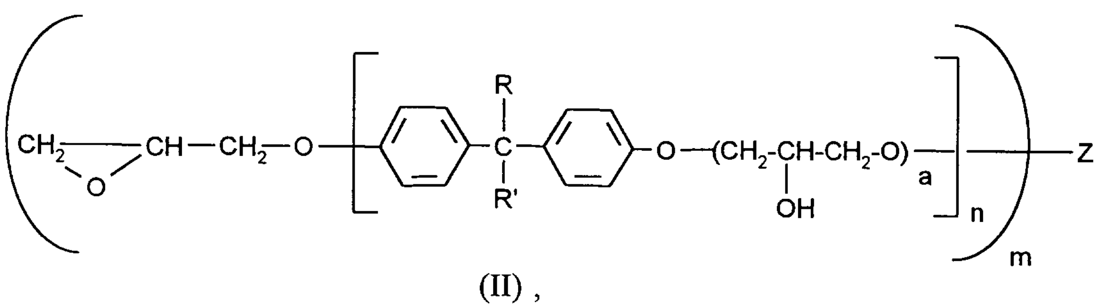

(II) ,

worin

a Null oder 1

R, R' und n die für Formel (I) genannte Bedeutung haben,

m eine ganze Zahl von 2 bis 5, vorzugsweise von 2 bis 3 und

Z ein 2- bis 5-bindiger, vorzugsweise 2- bis 3-bindiger $C_2$-$C_{10}$-Alkan-Rest sind, wobei $C_2$-Alkane maximal 2-bindig, $C_3$-Alkane maximal 3-bindig und $C_4$-Alkane maximal 4-bindig sind und wobei Acetal-, Ketal- oder Orthoester-Strukturen ausgeschlossen sind,

oder der Formel (III)

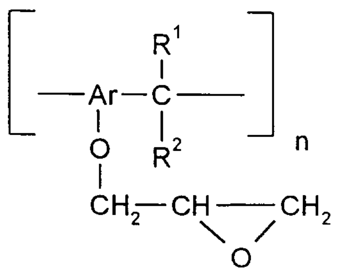

(III) ,

worin

-Ar- ein $C_6$-$C_{12}$-Arylenrest ist, der noch substituiert sein kann, vorzugsweise durch Alkyl,

$R^1$, $R^2$ unabhängig voneinander H oder $CH_3$, vorzugsweise H sind und

n eine ganze Zahl von 3 bis 1 000, vorzugsweise von 5 bis 20 ist, wobei die Summe der Gewichtsprozente der Komponenten A) + B) jeweils 100 beträgt.

Die erfindungsgemäßen Mischungen haben eine hohe Schmelzstandfestigkeit, verbunden mit einem guten Fließverhalten, die eine problemlose Verarbeitung bei einem ungewöhnlich großen Verarbeitungsfenster erlaubt. Die erfindungsgemäßen Mischungen sind somit insbesondere zur Herstellung von Formkörpern für optische Anwendungen geeignet.

Gegenstand der vorliegenden Erfindung ist somit auch die Verwendung der erfindungsgemäßen Mischungen zur Herstellung von Formkörpern für optische Anwendungen, insbesondere optische Speicher wie CD's und Platten.

Gemäß US-PS 3 978 020 sind thermisch stabile Polycarbonate mit einem Gehalt an Phosphorverbindungen und Epoxidverbindungen bekannt. Die Mengen an Epoxidverbindungen betragen 0,01 bis 0,5 Gew.-%. Die Abmischungen sind stabil gegenüber der Einwirkung von Wärme und Sauerstoff.

Gemäß DE-OS 2 400 045 sind Polycarbonate bekannt, die 0,01 Gew.-% bis 0,5 Gew.-% an einer besonderen Epoxyverbindung enthalten, ausgewählt aus der Gruppe aus aromatischen Epoxyverbindungen, aliphatischen Epoxyverbindungen und Mischungen derselben. Derartige Mischungen sind hydrolytisch stabil.

Gegenüber diesen beiden Literaturstellen unterscheiden sich die erfindungsgemäßen Mischungen dadurch, daß polymere Epoxide, keine monomeren Verwendung finden, wodurch eine höhere Schmelzstabilität erhalten wird.

Diese polymeren Epoxide führen nicht zu dem beschriebenen synergistischen Aufhellungseffekt in Kombination mit den P-haltigen Stabilisatoren, da vermutlich die Diffusionsgeschwindigkeit durch die Molekülgröße herabgesetzt ist. Stattdessen wird eine starke Vergrößerung des Verarbeitungsfensters insbesondere bei der CD-Herstellung erreicht, sowie ein Substrat erhalten, das bei Verwendung als CD-Material eine hervorragende Korrosionsbeständigkeit nach Lagerung im Klimaschrank besitzt.

Aus der DE-AS 2 019 325 sind pigmentierte Polycarbonate bekannt, die epoxygruppenhaltige Mischpolymerisate enthalten, und zwar in Mengen von 5 Gew.-% bis 100 Gew.-%, bezogen auf den Pigmentgehalt.

Aus der DE-OS 2 327 014 (Le A 15 025) sind gefüllte aromatische Polycarbonate bekannt, die Quarzmineral und gegebenenfalls $TiO_2$ enthalten und ein Epoxydgruppen-haltiges Vinylpolymerisat enthalten.

In beiden Fällen dienen die polymeren Epoxyde zur Neutralisierung der den Polycarbonaten zugemischten Pigmente beziehungsweise Quarzmineralien.

Die DOS 4 117 655 beschreibt die Verwendung von Fettsäureestern in Polycarbonat-Spritzgußmassen. So auch solche Fettsäureester auf Basis von Phenolharzen, deren, z.B. nach Hydrolyse entstandenen, Hydroxylgruppen mit Fettsäuren verestert worden sind. Derartige Ester sind unter Verarbeitungsbedingungen nicht stabil gegen Umesterung und enthalten im Gegensatz zu den erfindungsgemäßen Verbindungen keine epoxidhaltigen Reste.

Die als Komponente A) einzusetzenden thermoplastischen, aromatischen Polycarbonate im Sinne der vorliegenden Erfindung sind sowohl Homopolycarbonate als auch Copolycarbonate; die Polycarbonate können in bekannter Weise linear oder verzweigt sein.

Die Herstellung dieser erfindungsgemäß zu modifizierenden Polycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf "Schnell", Chemistry and Physics of Polycarbonates", Polymer Reviews, Volume 9, Interscience Publishers, New York, London, Sydney 1964, auf D. Freitag, U. Grigo, P.R. Müller, H. Nouvertne',BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der erfindungsgemäß zu modifizierenden Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-3,3,5-trimethylcyclohexan und 1-Phenyl-1,1-bis-(4-hydroxyphenyl)-ethan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan, 1,1-Bis-(4-hydroxyphenyl)-3,3,5-trimethylcyclohexan und 1-Phenyl-1,1-bis-(4-hydroxyphenyl)-ethan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate ist nur ein Diphenol eingesetzt, im Falle der Copolycarbonate sind mehrere Diphenole eingesetzt.

Geeignete Kohlensäurederivate sind beispielsweise Phosgen oder Diphenylcarbonat.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, sowie deren Gemische.

Geeignete Monocarbonsäuren sind Benzoesäure, Alkylbenzoesäuren und Halogenbenzoesäuren.

Bevorzugte Kettenabbrecher sind die Phenole der Formel (IV)

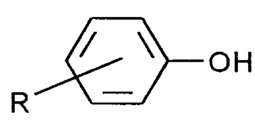

(IV)

worin

R ein verzweigter oder unverzweigter $C_4$- $C_8$- und/oder $C_9$-Alkylrest ist.

Die Menge an einzusetzendem Kettenabbrecher beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden; im Falle des Schmelzumesterungsverfahrens werden sie mit den Diphenolen eingesetzt.

Alle diese Maßnahmen zur Herstellung der Polycarbonate der Komponente A) sind dem Fachmann geläufig.

Die Epoxyharze der Formel (I) bis (III) sind bekannt, siehe Kirk Othmer "Encyclopedia of Chemical Technology" 4. Edition, Vol. 9, S. 731 ff. oder aus Bisphenol A bzw. Phenolharzen und Epichlorhydrin herstellbar gemäß dieser Literaturangabe.

Beispiele für solche der Formel (I) sind flüssige, niedrig- bis hochviskose Harze auf Basis von Bisphenol A

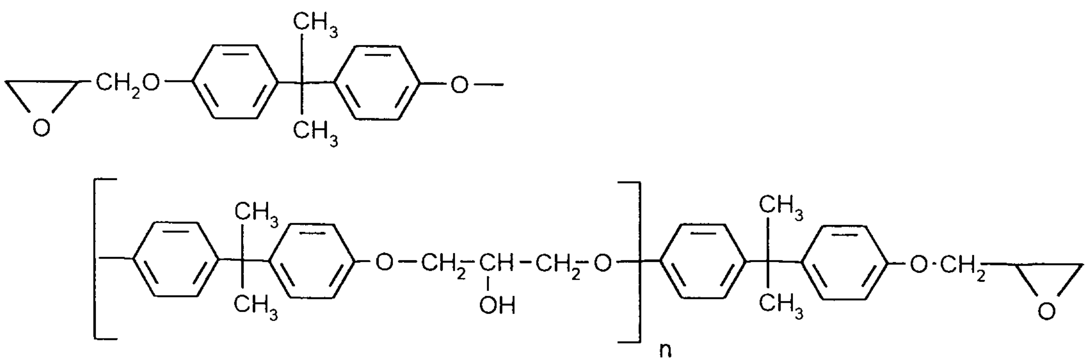

bzw. Bisphenol F

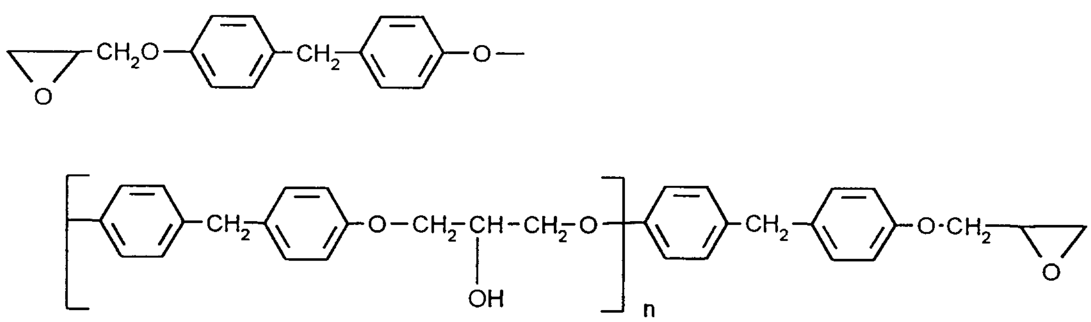

mit n = 2-20, bevorzugt mit Epoxidzahlen zwischen 0,3 bis 6,0 Eq/kg

Beispiele für Epoxyharze der Formel (II) sind solche der Formel (I), gestartet auf trifunktionellen Alkoholen.

Die Epoxyharze der Formel (III) sind ebenfalls bekannt (siehe obige Literaturangabe).

Beispiele dafür sind Novolakglycidyletherharze auf Basis Phenol, Formaldehyd und Epichlorhydrin:

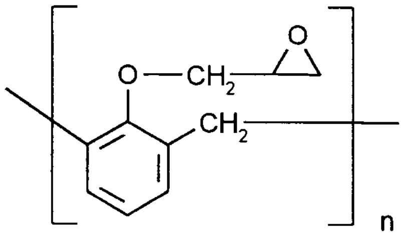

mit einer Funktionalität, bezogen auf Epidchlorhydrin, von 1,5 bis 5.

Die Zudosierung des Epoxyds kann in der Aufarbeitungsphase der Polycarbonatsynthese oder auch durch anschließende Zumischung in einem Compoundierungsschritt vorgenommen werden.

Wird die Compoundierung gewählt, so können die Epoxidharze bzw. deren Gemische, in Substanz oder als Master batch von 0,5 % bis 15 %, bevorzugt 2 % bis 5 %, Epoxydharz in einem Polycarbonat, dem Compoundierextruder zugeführt werden. Im gleichen Compoundierschritt können gegebenenfalls weitere Additive im Gemisch mit dem Epoxydharz oder dessen Master batch zugegeben werden.

Wird die Aufarbeitung des Polycarbonats zur Zugabe des Epoxidharzes gewählt, so können diese, gegebenenfalls neben anderen Additiven, der einzuengenden polycarbonatlösung zugegeben werden.

Geschieht die Konzentrierung letztlich durch einen Ausdampfextruder, so kann wie oben verfahren werden, oder die Zugabe des Epoxydharzes bzw. seiner Gemische oder die entsprechenden Master batches können, z.B. per Seitenextruder dem Ausdampfextruder, gegebenenfalls neben anderen Additiven, zugesetzt werden. Hierbei ergibt sich die Variante, daß das Epoxydharz flüssig oder geschmolzen einem, gegebenenfalls additivhaltigen, Polycarbonatstrom, der durch den Seitenextruder dem Ausdampfextruder zugeführt wird, zugegeben wird.

Gegenstand der vorliegenden Erfindung ist somit auch ein Verfahren zur Herstellung der erfindungsgemäßen Mischungen aus den Komponenten A) und B), das dadurch gekennzeichnet ist, daß man in der Aufarbeitungsphase der Polycarbonat-Komponente A) oder danach die Epoxyharz-Komponente B) in Substanz oder als 0,5 gew.-%iger bis 15 gew.-%iger, vorzugsweise als 2 gew.-%iger bis 5 gew.-%iger Masterbatch in einem thermoplastischen Polycarbonat, der Polycarbonatkomponente A) über deren Schmelze oder deren Lösung einarbeitet, und zwar in Mengen von 0,001 Gew.-% bis 0,5 Gew.-%, vorzugsweise von 0,005 Gew.-% bis 0,2 Gew.-%, bezogen auf 100 Gew.-% A) + B).

Das als Masterbatch eingesetzte thermoplastische Polycarbonat entspricht jeweils einem der als Komponente A) definierten thermoplastischen, aromatischen Polycarbonat, es kann mit dem der jeweiligen Komponente A) identisch sein oder auch davon verschieden sein.

Als Lösungsmittel für die Polycarbonatlösung der Komponente A) dienen beispielsweise $CH_2Cl_2$ oder Chlorbenzol.

Wie bereits erwähnt können die erfindungsgemäßen Mischungen der Komponenten A) und B) noch zusätzliche Additive enthalten, beispielsweise Entformungsmittel, Flammschutzmittel, Antistatika, Stabilisatoren gegen UV-Licht und Temperaturbelastung, wie sie für thermoplastische aromatische Polycarbonate bekannt sind in den für Polycarbonate üblichen Mengen. Beispiele für derartige Additive sind Entformungsmittel auf Basis von Stearinsäure und/oder Stearinalkohol, besonders bevorzugt Pentaerythrittetrastearat, Trimethylolpropantristearat, Pentaerythritdistearat, Stearylstearat und Glycerinmonostearat, sowie Thermostabilisatoren auf Basis von Phosphanen und Phosphiten.

Gegenstand der vorliegenden Erfindung sind somit auch Mischungen, bestehend aus den Polycarbonaten der Komponente A) und den Epoxyharzen der Komponente B) in den erfindungsgemäßen Gewichtszusammensetzungen sowie mindestens einem zusätzlichen Additiv, ausgewählt aus Entformungsmitteln, Flammschutzmitteln, Antistatika, Stabilisatoren gegen UV Licht und Stabilisatoren gegen Temperaturbelastung in den für Polycarbonate üblichen Mengen.

Gegenstand der vorliegenden Erfindung ist außerdem ein Verfahren zur Herstellung dieser erfindungsgemäßen, Additiv-haltigen Polycarbonat-Mischungen, das dadurch gekennzeichnet ist, daß man die erfindungsgemäße Einarbeitung der Komponente B) in die Komponente A) zusammen mit mindestens einem zusätzlichen Additiv, ausgewählt aus Entformungsmitteln, Flammschutzmitteln, Antistatika, Stabilisatoren gegen UV-Licht und Stabilisatoren gegen Temperaturbelastung in den für Polycarbonate üblichen Mengen kombiniert.

Die erfindungsgemäßen Polycarbonat-Mischungen lassen sich zu üblichen Bedingungen auf den üblichen Maschinen zu beliebigen Formkörpern wie Platten, Folien, Fäden, Apparategehäusen verarbeiten.

Schwerpunkt der technischen Anwendung, beziehungsweise Brauchbarkeit der erfindungsgemäßen Polycarbonat-Mischungen sind alle Extrusions- und Spritzgußanwendungen, insbesondere jedoch solche für optische Artikel im weitesten Sinne wie Platten und Hohlkammerplatten, ganz besonders jedoch für optische Speicherplatten, wie z.B. Compact Discs, wie dies eingangs bereits angesprochen ist.

**Beispiele**

Als Maß für die Schmelzenstandfestigkeit in der Düse wird der Schneckenrückzug des Extruders herangezogen, der notwendig ist um ein Nässen der Düse zu verhindern. Die durch den Δ-Wert angegebene Größe steht für die Breite des Verarbeitungsfensters. Das gleiche gilt für die angegebenen Düsentemperaturen.

Ein weiteres Kriterium für ein störungsfreies Verarbeitungsverhalten ist die Neigung des Polycarbonats zur Blasenbildung bei thermischer Belastung, von 1= keine Bläschen bis 6= sehr viele Bläschen vorgenommen. Dazu wurden die Materialien in einer Spritzgußmaschine bei 320°C aufgeschmolzen und die Schmelze in ein Auffangbehältnis gespritzt. Nach dem Abkühlen wird an dem so erhaltenen Schmelzkuchen die Größe und die Anzahl der Luftbläschen untersucht.

Zur Beurteilung der Korrosionsbeständigkeit wurden metallisierte compact discs im Klimaschrank bei 80°C und 90 % Luftfeuchtigkeit 800 h gelagert und anschließend die Korrosionsbeständigkeit in der Metallschicht als block-error-rate mit einem ISEDD-CD-Tester gemessen.

Ergebnisse:

| Produkt | Schneckenrückzug | Δ-Wert | mögliche Düsentemp. | Blasen | block-error rate |
|---|---|---|---|---|---|
| A | 2 mm | 1 mm | 280-305°C | 5 | 59 |
| B | 0,4 mm | 2,4 mm | 280-330°C | 2 | 2 |
| C | | | | 2 | 10 |

Materialien:

A: Polycarbonat aus Bisphenol-A ohne Additive ($M_w$= 20 000 nach GPC)
B: wie A + 0,05 Gew.-% Epoxid
der Allg. Formel (Ia) MG ca. 1 000

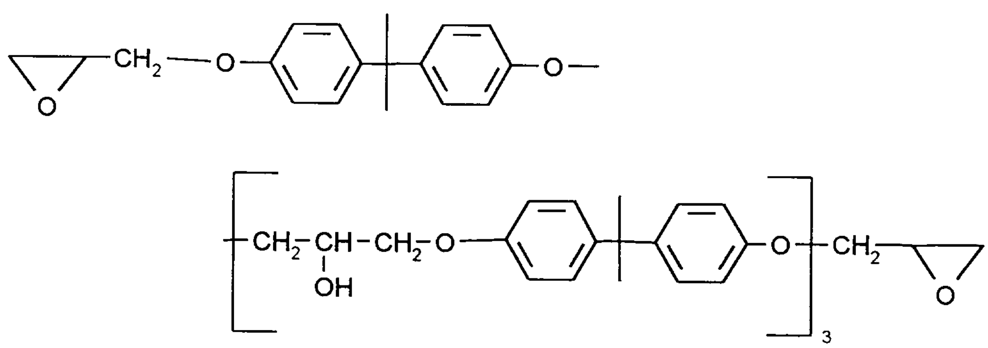

(Ia)

C: wie A + 0,1 Gew.-% Epoxyd des Versuchs B.

**Patentansprüche**

1. Gegenstand der vorliegenden Erfindung sind Mischungen, enthaltend

   A) 99.999 Gew.-% bis 99,5 Gew.-%, an thermoplastischen, aromatischen Polycarbonaten mit mittleren Gewichtsmittelmolekulargewichten $\overline{M}_w$ (ermittelt durch GPCvon 12 000 bis 40 000, vorzugsweise von 15 000 bis 35 000 und insbesondere von 15 000 bis 25 000 und

   B) 0,001 Gew.-% bis 0,5 Gew.-%, vorzugsweise 0,005 Gew.-% bis 0,2 Gew.-% an polymeren Epoxyharzen mit mittleren Zahlenmittelmolekulargewichten $\overline{M}_n$ (ermittelt durch GPC)von 500 bis 25 000, vorzugsweise von 750

bis 5 000,
der Formel (I)

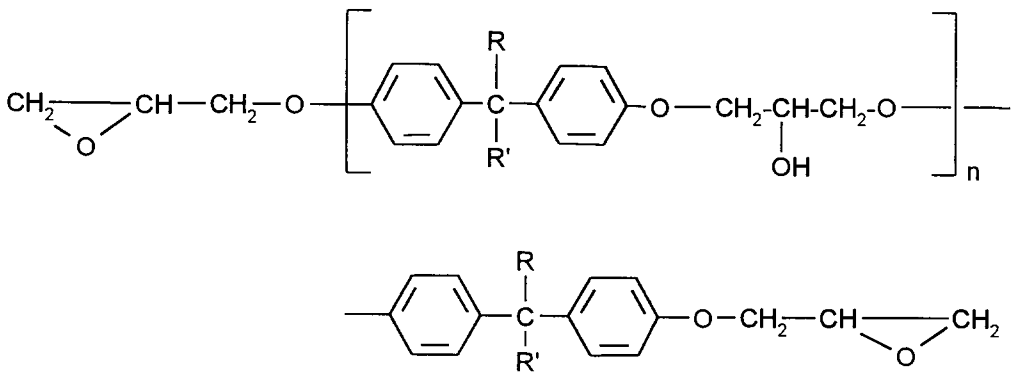

(I),

worin

R, R' unabhängig voneinander H, $C_1$-$C_{12}$-Alkyl, Phenyl, Benzyl oder zusammen einen Cyclohexyl-Rest bedeuten, vorzugsweise H, $CH_3$ oder zusammen den Cyclohexylrest bedeuten,

n eine ganze Zahl von 2 bis 1 000, vorzugsweise von 3 bis 20 ist, oder

der Formel (II)

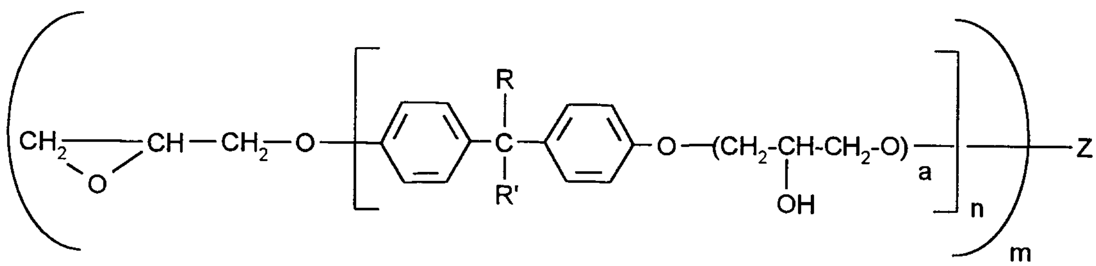

(II) ,

worin

a Null oder 1

R, R' und n die für Formel (I) genannte Bedeutung haben,

m eine ganze Zahl von 2 bis 5, vorzugsweise von 2 bis 3 und

Z ein 2- bis 5-bindiger, vorzugsweise 2- bis 3-bindiger $C_2$-$C_{10}$-Alkan-Rest sind, wobei $C_2$-Alkane maximal 2-bindig, $C_3$-Alkane maximal 3-bindig und $C_4$-Alkane maximal 4-bindig sind und wobei Acetal-, Ketal- oder Orthoester-Strukturen ausgeschlossen sind,

oder der Formel (III)

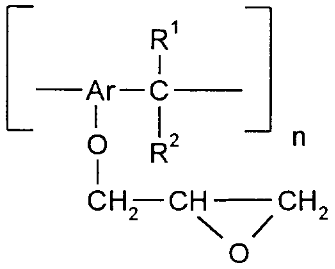

(III) ,

worin

-Ar- ein $C_6$-$C_{12}$-Arylenrest ist, der noch substituiert sein kann, vorzugsweise durch Alkyl,

$R^1$, $R^2$ unabhängig voneinander H oder CH sind und

n eine ganze Zahl von 3 bis 1 000, vorzugsweise von 5 bis 20 ist, wobei die Summe der Gewichtsprozente der Komponenten A) + B) jeweils 100 beträgt.

**2.** Mischungen gemäß Anspruch 1 enthaltend

A) 99.995 Gew.-% bis 99,8 Gew.-% Polycarbonat und

B) 0,005 Gew.-% bis 0,2 Gew.-% an Epoxyharz.

**3.** Verfahren zur Herstellung der Mischungen des Anspruchs 1, dadurch gekennzeichnet, daß man in der Aufarbeitungsphase der Polycarbonat-Komponente A) oder danach die Epoxyharz-Komponente B) in Substanz oder als 0,5 gew.-%iger bis 15 gew.-%iger Masterbatch in einem thermoplastischen Polycarbonat, der Polycarbonatkomponente A) über deren Schmelze oder deren Lösung einarbeitet, und zwar in Mengen von 0,001 Gew.-% bis 0,5 Gew.-%, bezogen auf 100 Gew.-% A) + B).

**4.** Mischungen gemäß Anspruch 1, dadurch gekennzeichnet, daß sie zusätzlich aus einem Additiv, ausgewählt aus Entformungsmitteln, Flammschutzmitteln, Antistatika, Stabilisatoren gegen UV-Licht und Stabilisatoren gegen Temperaturbelastung in den für Polycarbonate üblichen Mengen bestehen.

**5.** Verfahren gemäß Anspruch 3 zur Herstellung der Mischungen des Anspruchs 4, dadurch gekennzeichnet, daß man die erfindungsgemäße Einarbeitung der Komponente B) in die Komponente A) zusammen mit mindestens einem zusätzlichen Additiv ausgewählt aus Entformungsmitteln, Flammschutzmitteln, Antistatika, Stabilisatoren gegen UV-Licht und Stabilisatoren gegen Temperaturbelastung in den für Polycarbonate üblichen Mengen kombiniert.

**6.** Verwendung der Mischungen des Anspruchs 1 zur Herstellung von Formkörpern für optische Anwendungen, insbesondere optische Speicher wie CD's und Platten.